(19) Europäisches Patentamt
European Patent Office
Office européen des brevets

(11) **EP 3 820 028 B1**

(12) **EUROPEAN PATENT SPECIFICATION**

(45) Date of publication and mention
of the grant of the patent:
**18.10.2023 Bulletin 2023/42**

(21) Application number: **19830576.5**

(22) Date of filing: **05.07.2019**

(51) International Patent Classification (IPC):
**G01D 5/20** (2006.01)       **H02K 24/00** (2006.01)

(52) Cooperative Patent Classification (CPC):
**H02K 24/00; G01D 5/2046;** G01D 2205/77

(86) International application number:
**PCT/KR2019/008273**

(87) International publication number:
**WO 2020/009517 (09.01.2020 Gazette 2020/02)**

(54) **VARIABLE RELUCTANCE RESOLVER**

DREHMELDER MIT VARIABLER RELUKTANZ

RÉSOLVEUR À RÉLUCTANCE VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2018 KR 20180078771**

(43) Date of publication of application:
**12.05.2021 Bulletin 2021/19**

(73) Proprietor: **Global Engineerings Co., Ltd.**
**Hwaseong-si, Gyeonggi-do 18487 (KR)**

(72) Inventors:
• **KIM, Hyun Kyu**
**Seoul 05834 (KR)**
• **KIM, Dongyun**
**Hwaseong-Si, Gyeonggi-do 18507 (KR)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**EP-A1- 2 666 696         CN-A- 106 067 717**
**JP-A- 2003 032 989       JP-A- 2010 263 768**
**JP-A- 2016 013 000       JP-A- 2017 120 222**
**US-A1- 2009 184 598**

EP 3 820 028 B1

**Description**

## TECHNICAL FIELD

An embodiment of the present invention relates to a variable reluctance resolver.

## BACKGROUND ART

A variable reluctance resolver is a position and angle sensor, and when a reference signal of several kHz is applied to a magnetic coil, a signal converted according to a position of a rotor unit is outputted. The output signal may include two outputs having a mutual phase difference of 90°, and one of two output coils may produce a sine-waveform output signal and the other may produce a cosine-waveform output signal. A rotation angle of the rotor unit may be recognized through the two output signals. In relation to this, U.S. Patent Registration No. 7030532 may be considered as the related art.

Since the above variable reluctance resolver has an environmental resistance, the variable reluctance resolver is used as an angle sensor for defense industrial products or special environment products, and also applied to various fields such as various industries or vehicles.

JP 2017/120222 A describes a resolver having a push-pull circuit connected to an excitation winding and a midpoint provided in an excitation winding. The resolver comprises a ring-shaped stator including protruding magnetic poles and an elliptical rotor.

EP 2 666 696 A1 describes a valve for vehicle height adjustment including a resolver for railway carriage. The resolver includes a stator and a rotor, wherein the rotor may be formed in a shape in which a gap between the outer circumferential surface of the rotor and the inner circumferential end surface portion of an inner iron core of the stator changes periodically.

## DISCLOSURE OF THE INVENTION

## TECHNICAL PROBLEM

An embodiment of the present invention provides a variable reluctance resolver including a rotor unit having a novel structure and a novel shape.

An embodiment of the present invention also provides a variable reluctance resolver forming a plurality of salient poles on a rotor unit shape so that a permeance of a magnetic force gap moves along an elliptical function.

An embodiment of the present invention also provides a variable reluctance resolver having a reduced error range of angle measurement and a position and an improved accuracy.

## TECHNICAL SOLUTION

An embodiment of the present invention provides a variable reluctance resolver including: a stator unit including a ring-shaped stator unit core and a plurality of teeth protruding inward in a radial direction on an inner circumferential surface of the stator unit core; a rotor unit spaced inward from the stator unit to rotate around a center shaft; and a terminal unit formed on one side of the stator unit. Here, the rotor unit includes at least one salient pole convexly formed outward along an outer circumferential surface thereof, and each of the at least one salient pole is formed in the shape of an oval arc, wherein the oval arc comprising a major axis having a greater diameter and a minor axis having a smaller diameter, a ratio (a/b) of the length of the major axis with respect to the length of the minor axis is in a range from 1.04 to 1.10.

In an embodiment, in the oval including a major axis having a greater diameter and a minor axis having a smaller diameter, which are perpendicular to each other, each of the at least one salient pole may have an arc shape that is axial-symmetric with respect to the minor axis.

In an embodiment, an extended line to the center shaft from a central position of an outer circumferential surface of each of the at least one salient pole may coincide with the minor axis of the oval.

In an embodiment, the outer circumferential surface of each of the at least one salient pole may have an arc shape that contacts the minor axis.

In an embodiment, in an oval including the outer circumferential surface of any one of the at least one salient pole, a center of the oval may be spaced a predetermined distance in a radial direction from the center shaft.

In an embodiment, the outer circumferential surface of each of the at least one salient pole may be formed according to a mathematical equation below.

$$\frac{x^2}{a^2} + \frac{y^2}{b^2} = 1$$

(where, a>b)

(where, a is a half of a length of the major axis of the oval, and b is a half of a length of the minor axis of the oval)

In an embodiment, at least two salient poles may be formed, and the at least two salient poles may be formed radially with respect to the center shaft.

## ADVANTAGEOUS EFFECTS

The embodiments of the present invention may include the rotor unit having the novel structure and shape.

The embodiments of the present invention may also provide the variable reluctance resolver forming the plurality of salient poles on the rotor unit shape so that the permeance of the magnetic force gap moves along the elliptical function.

The embodiments of the present invention may also provide the variable reluctance resolver having the reduced error range of the angle measurement and the position and the improved accuracy.

## BRIEF DESCRIPTION OF THE DRAWINGS

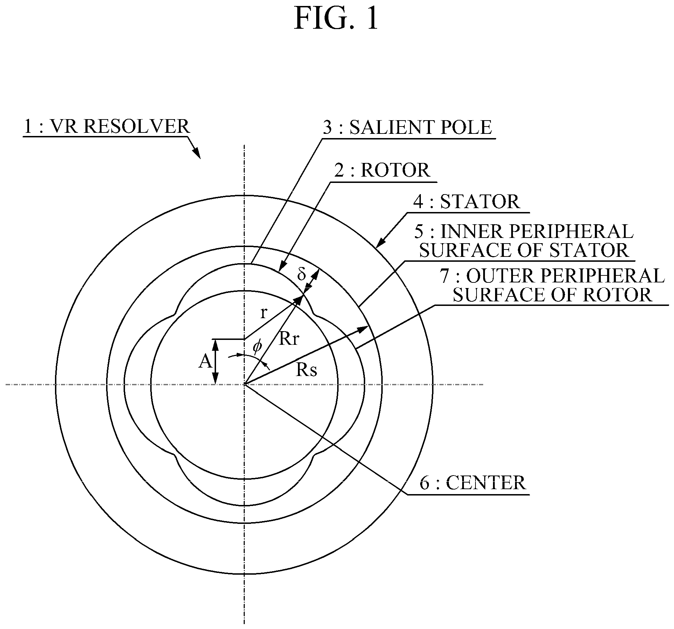

FIG. 1 is a view illustrating a shape of a variable reluctance resolver of the related art.

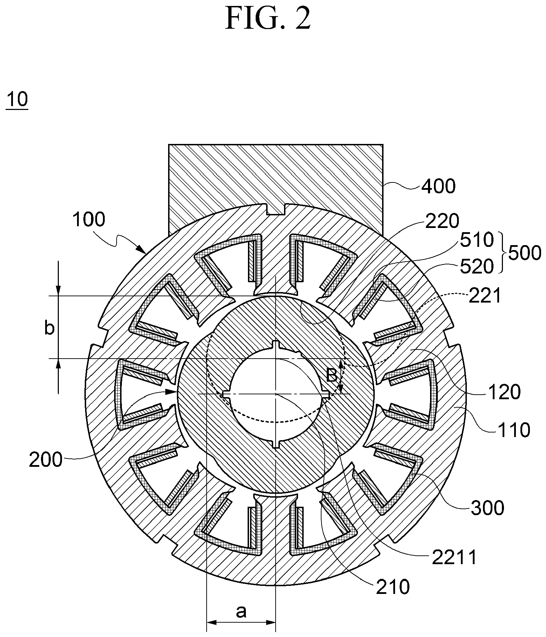

FIG. 2 is a view illustrating a cross-sectional shape perpendicular to a rotation axis of a variable reluctance resolver according to an embodiment of the present invention.

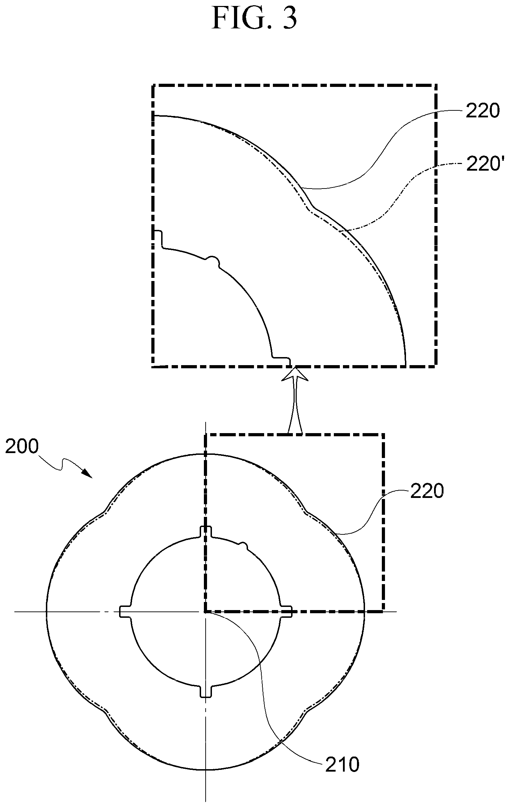

FIG. 3 is a view illustrating a shape of a rotor unit of the variable reluctance resolver according to an embodiment of the present invention in conjunction with a shape of a rotor unit of the variable reluctance resolver of the related art.

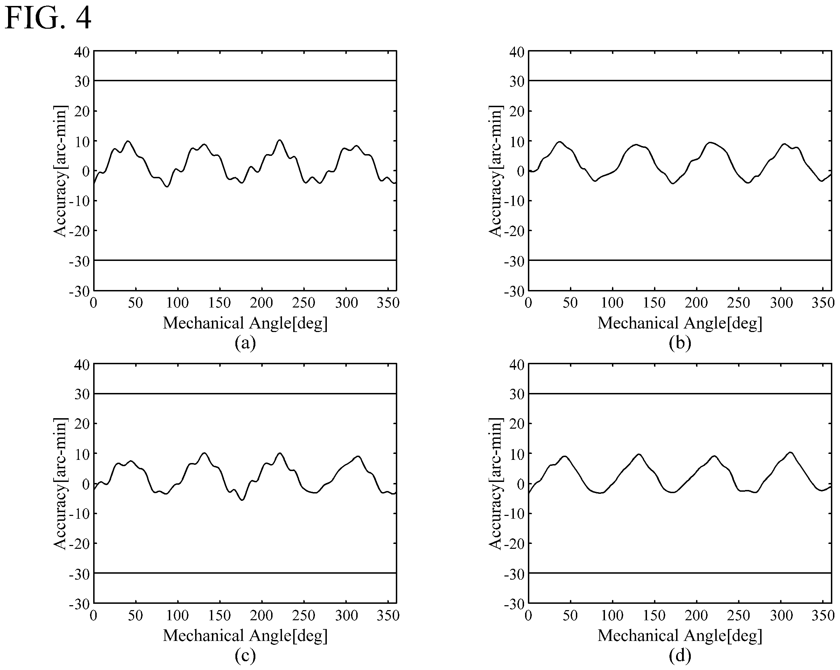

FIG. 4A is a graph showing performance experiment data according to a shape of a rotor unit of the variable reluctance resolver of the related art in FIG. 1, FIG. 4B is a graph showing first performance experiment data according to a shape of a rotor unit of a variable reluctance resolver according to an embodiment of the present invention, FIG. 4C is a graph showing second performance experiment data according to a shape of a rotor unit of a variable reluctance resolver according to an embodiment of the present invention, and FIG. 4B is a graph showing third performance experiment data according to a shape of a rotor unit of a variable reluctance resolver according to an embodiment of the present invention.

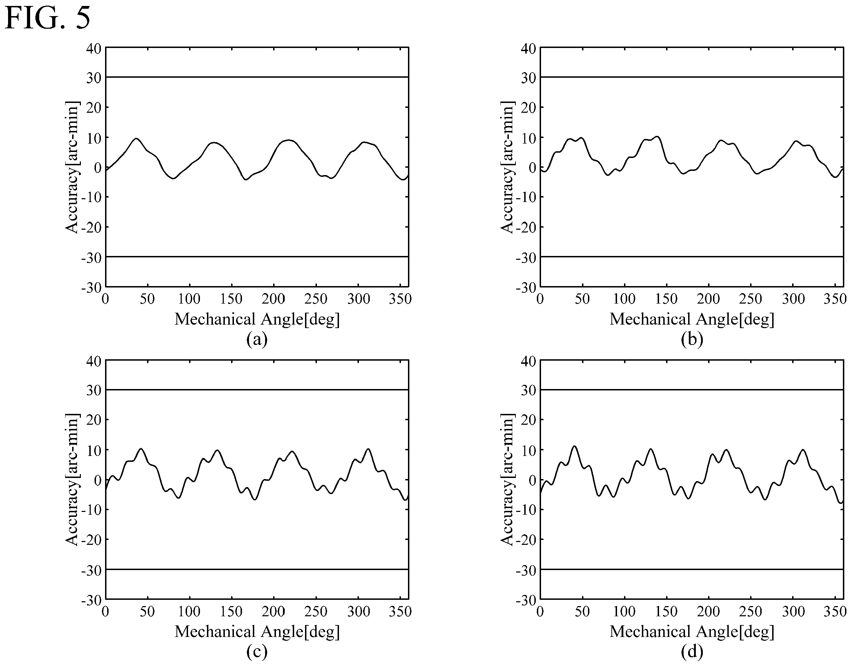

FIG. 5A is a graph showing fourth performance experiment data according to a shape of a rotor unit of a variable reluctance resolver according to an embodiment of the present invention, FIG. 5B is a graph showing fifth performance experiment data according to a shape of a rotor unit of a variable reluctance resolver according to an embodiment of the present invention, FIG. 5C is a graph showing sixth performance experiment data according to a shape of a rotor unit of a variable reluctance resolver according to an embodiment of the present invention, and FIG. 5D is a graph showing seventh performance experiment data according to a shape of a rotor unit of a variable reluctance resolver according to an embodiment of the present invention.

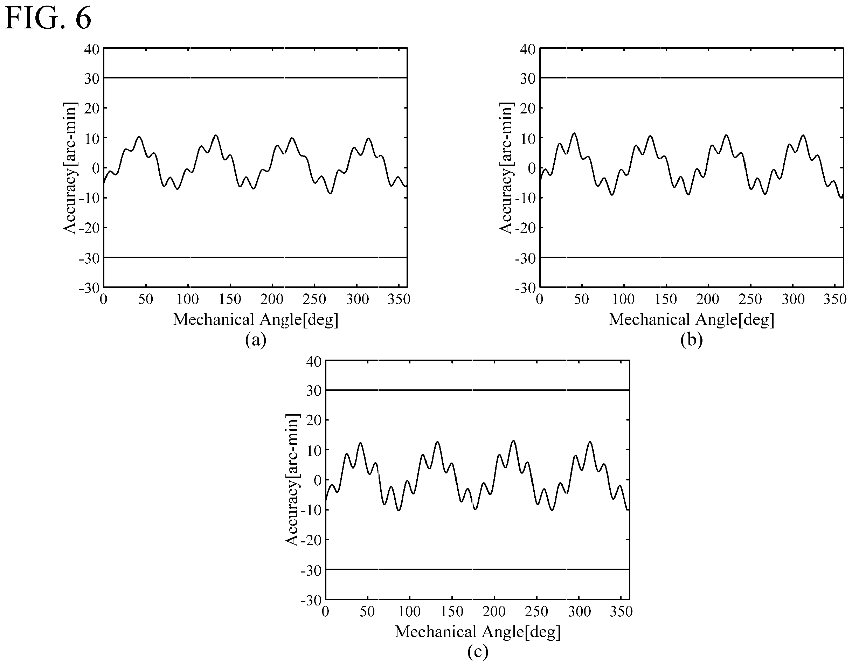

FIG. 6A is a graph showing eighth performance experiment data according to a shape of a rotor unit of a variable reluctance resolver according to an embodiment of the present invention, FIG. 6B is a graph showing ninth performance experiment data according to a shape of a rotor unit of a variable reluctance resolver according to an embodiment of the present invention, and FIG. 6C is a graph showing tenth performance experiment data according to a shape of a rotor unit of a variable reluctance resolver according to an embodiment of the present invention.

## MODE FOR CARRYING OUT THE INVENTION

Hereinafter, preferred embodiments of the present invention will be described with reference to the accompanying drawings. However, this is merely an example, and the embodiments of the present invention are not limited thereto.

Moreover, detailed descriptions related to well-known functions or configurations will be ruled out in order not to unnecessarily obscure subject matters of the present invention. Also, terms used in this specification are terms defined in consideration of functions according to embodiments, and thus the terms may be changed according to the intension or usage of a user or operator. Therefore, the terms should be defined on the basis of the overall contents of this specification.

The description of the present invention is intended to be illustrative, and those with ordinary skill in the technical field of the present invention pertains will be understood that the present invention can be carried out in other specific forms without changing the technical idea or essential features. Hence, the real protective scope of the present invention shall be determined by the technical scope of the accompanying claims.

FIG. 1 is a view illustrating a shape of a variable reluctance resolver of the related art, and FIG. 2 is a view illustrating a cross-sectional shape perpendicular to a rotation axis of a variable reluctance resolver 10 according to an embodiment of the present invention.

Referring to FIGS. 1 and 2, the variable reluctance resolver 10 according to an embodiment of the present invention may include a stator unit 100, a rotor unit 200, and a terminal unit 400. Here, the stator unit 100 may include a stator unit core 110 formed by laminating a plurality of ring-shaped sheets and a plurality of teeth protruding inward in an axial direction from an inner circumferential surface of the stator unit core 110 and around which a coil 500 is wound. Also, the rotor unit 200 may be disposed inside the stator unit 100 and spaced apart from end of each of the plurality of teeth 120 to rotate around a center shaft 210.

Also, the rotor unit 200 may include at least one salient pole 220 protruding outward along an outer circumferential surface thereof. Here, each of at least one salient pole 220 may have a shape of an arc of an oval 221.

The coil 500 may include a magnetic coil 510 and an output coil 520. Here, two output coils 520 may be provided, and one of the two output coils 520 may produce a sine-waveform output signal and the other may produce a cosine-waveform output signal.

An outer circumferential surface of each of the at least one salient pole 220 may be an arc of the oval 221 including a major axis having a greater diameter and a minor axis having a smaller diameter, which are perpendicular to each other. That is, when the outer circumferential surface of each of the at least one salient pole 220 extends, the virtual oval 221 including the major axis and the minor axis may be formed.

Also, each of the at least one salient pole 220 may have an arc shape that is axial symmetric with respect to the minor axis of the oval 221 including the major axis and the minor axis. That is, an extended line from a central position of each of the at least one salient pole 220 to the center shaft 210 of the rotor unit 200 may coincide with the minor axis of the oval 221. Furthermore, the outer circumferential surface of each of the at least one salient pole 220 may have an arc shape contacting the minor axis.

Here, the outer circumferential surface of each of the at least one salient pole 220 may be formed according to mathematical equation 1.

【Mathematical equation 1】

$$\frac{x^2}{a^2} + \frac{y^2}{b^2} = 1 \quad \text{(where, a>b)}$$

(where, a is a half of a length of the major axis of the oval 221, and b is a half of a length of the minor axis of the oval 221)

Furthermore, the virtual oval 221 including the outer circumferential surface of each of the at least one salient pole 220 may be formed according to the mathematical equation 1. That is, each of the salient pole 220 may have a shape of the oval 221 in which a length of the minor axis formed along a direction of the center shaft 210 of the rotor unit 200 is shorter than a length of the major axis perpendicular to the center shaft 210 of the rotor unit 200.

In case of the variable reluctance resolver 10, at least two salient poles 220 may be formed radially with respect to the center shaft 210 of the rotor unit 200. Through this, the plurality of teeth 120 protruding from the inner circumferential surface of the stator unit core in the direction of the center shaft 210 may face an outer circumferential surface of each of the at least two salient poles 220.

Although four salient poles 220 are exemplarily formed in FIG. 2, this is merely an example, and the embodiment is not limited thereto.

Also, a center 2211 of the virtual oval including the outer circumferential surface of the at least one salient pole 220 may be spaced by a predetermined distance B in a radial direction from the center shaft 210 of the rotor unit 200. That is, when three salient poles 220 are formed, the outer circumferential surface of each of the three salient poles 220 may have a shape of an arc of the oval 221, and each of the centers 2211 of the three ovals including the outer circumferential surfaces of the three salient poles 220 may be spaced by a predetermined distance B in a radial direction from the center shaft 210 of the rotor unit 200.

Furthermore, the center 2211 of the virtual oval including the outer circumferential surface of any one of the at least one salient pole 220 may be disposed between the outer circumferential surface of the at least one salient pole 220 and the center shaft 210 of the rotor unit 200. That is, the center 2211 of the virtual oval including the outer circumferential surface of the at least one salient pole 220 may be spaced by a predetermined distance B from the center shaft 210 in a direction of the outer circumferential surface of the at least one salient pole 220.

The variable reluctance resolver 10 according to an embodiment of the present invention may further include one pair of insulators 300 assembled at both sides in an axial direction of the stator unit core 110. Also, the terminal unit 400 may include a terminal unit support member (not shown) for fixing and supporting a plurality of terminal unit pins (not shown) connected with an end of the magnetic coil 510 and an end of the output coil 520. The terminal unit support member may be integrated with any one of the one pair of insulators 300.

Specifically, the terminal unit 400 may be disposed at one side in a radial direction of the stator unit 100. Also, the one pair of insulators 300 may cover at least a portion of outer surfaces of the plurality of teeth 120 (preferably, a circumferential surface using a protruding direction of each of teeth 120 as a center shaft), and at least a portion of both side surfaces of the axial direction of the stator unit core 110 may be surrounded by the one pair of insulators 300. Through this, the coil including the magnetic coil 510 and the output coil 520 may be wound on the plurality of teeth 120 by using the one pair of insulators 300.

FIG. 3 is a view illustrating a shape of a rotor unit 200 of the variable reluctance resolver 10 according to an embodiment of the present invention in conjunction with a shape of a rotor unit of a variable reluctance resolver of the related art, and FIG. 4A is a graph showing performance experiment data according to the shape of the rotor unit of the variable reluctance resolver of the related art in FIG. 1. Also, FIGS. 4B to 4D, FIGS. 5A to 5D, and FIGS. 6A to 6C are graphs showing first to tenth performance experiment data, respectively, according to the shape of the rotor unit 200 of the variable reluctance resolver 10 according to an embodiment of the present invention. Here, in FIG. 3, a portion illustrated by a dotted line represents an outer circumferential surface of a salient pole 220' of the variable reluctance resolver of the related art, and a portion illustrated by a solid line represents the outer circumferential surface of the salient pole 220 of the variable reluctance resolver 10 according to an embodiment of the present invention.

Here, each of the first to tenth performance experiment data according to the shape of the rotor unit 200 of the variable reluctance resolver 10 according to an embodiment of the present invention is result data of an accuracy (or an error rate) measured while changing a ratio (a/b) of the length of the major axis with respect to the length of the minor axis in the shape of the oval 221 including the outer circumferential surface of salient pole 220 by 0.02 unit. Also, results of the performance experiment date according to the shape of the rotor unit of the variable reluctance resolver of the related art and the first to tenth performance experiment data are compared below in table 1.

[Table 1]

| Classification | a/b | Accuracy (arc-min) |
|---|---|---|
| Rotor unit of related art | 1.00 | 16.7535 |
| First performance experiment | 1.02 | 16.0524 |
| Second performance experiment | 1.04 | 15.8054 |
| Third performance experiment | 1.06 | 15.7852 |
| Fourth performance experiment | 1.08 | 15.7741 |
| Fifth performance experiment | 1.10 | 15.5057 |
| Sixth performance experiment | 1.12 | 16.5315 |
| Seventh performance experiment | 1.14 | 16.9618 |
| Eighth performance experiment | 1.16 | 19.7400 |
| Ninth performance experiment | 1.18 | 21.3530 |
| Tenth performance experiment | 1.20 | 23.3762 |

Referring to FIGS. 3, 4A to 4D, 5A to 5D, and 6A to 6C, in case of an output accuracy of the variable reluctance resolver including the outer circumferential surface of the salient pole 220' having an arc shape of a predetermined radius r of the related art in FIG. 1, an accuracy (or an error rate) is 16.7535 min. Also, in case of an output accuracy of the variable reluctance resolver 10 according to an embodiment of the present invention, it may be known that accuracies of the first to tenth performance experiment data are 16.0524 min, 15.8054 min, 15.7852 min, 15.7741 min, 15.5057 min, 16.5315 min, 16.961 8min, 19.7400 min, 21.3530 min, and 23.3762 min, respectively.

As described above, it may be known that the accuracy is equal to or less than 16 min when the ratio (a/b) of the length of the major axis with respect to the length of the minor axis in the shape of the oval 221 including the outer circumferential surface of salient pole 220 in the rotor unit 200 of the variable reluctance resolver 10 according to the present invention is 1.04 to 1.10. From this result, it may be known that the accuracy of the variable reluctance resolver according the shape of the rotor unit including the arc-shaped salient pole of the related art improves by 0.7 min or more. Thus, it may be known that significantly great accuracy improvement is achieved in the variable reluctance resolver to which the accuracy of rotation angle measurement is the most important.

Also, as an angle of 1° may represent 60 min (1° = 60 min), and while the accuracy (or the error rate) of the variable reluctance resolver of the related art is 0.279°, the ratio (a/b) of the length of the major axis with respect to the length of the minor axis in the shape of the oval 221 including the outer circumferential surface of salient pole 220 in case of the variable reluctance resolver 10 according to an embodiment of the present invention is 1.04 to 1.10, it may be known that the accuracy (or the error rate) significantly improves to be equal to or less than 0.267°. Furthermore, in case that the ratio of the length of the major axis with respect to the length of the minor axis in the shape of the oval 221 including the outer circumferential surface of salient pole 220 is in a range from 1.04 to 1.10, it may be known that the accuracy significantly improves in comparison with a case that the ratio (a/b) of the length of the major axis with respect to the length of the minor axis is equal to or greater than 1.10.

It may be known from the above-described experiment results that the variable reluctance resolver 10 including the rotor unit 200 on which the oval-shaped salient pole 220 is formed may secure improved measurement accuracy in comparison with the variable reluctance resolver including the rotor unit on which the arc-shaped salient pole 220' is formed of the related art.

The above-described experiment data are measured by changing only the ratio (a/b) of the length of the major axis with respect to the length of the minor axis in the oval 221 and the shape of the salient pole 220 of the rotor unit 200 in the variable reluctance resolver 10 according to an embodiment of the present invention in FIG. 2 in the shapes of the rotor unit and the stator unit. That is, the experiments are performed in the same condition except for the number of the salient pole 220, the number of the teeth 120, the winding number of the coil 500, and an inner diameter and an outer diameter of each of the rotor unit 200 and the stator unit 100.

Also, the above-described performance experiment data are performed through electromagnetic analysis using software called JMAG. Here, the above-described accuracy (or the error rate) may be defined as a different value between a maximum value and a minimum value of analyzed output rotation angle profile when an output waveform of the variable reluctance resolver is analyzed and then the analyzed rotation angle profile is calculated under each condition in which only a condition related to the shape of the salient pole 220 is changed, and the analyzed output rotation angle profile is compared with an ideal rotation angle profile (0 of an Y-axis in the above performance experiment data).

Although the exemplary embodiments of the present invention have been described, it is understood that the present invention should not be limited to these exemplary embodiments but various changes and modifications can be made by one ordinary skilled in the art within the scope of the present invention as hereinafter claimed. Therefore, the scope of this disclosure is defined not by the detailed description of the invention but by the appended claims, and all differences within the scope will be construed as being included in the present invention.

**Claims**

1. A variable reluctance resolver (10) comprising:

   a stator unit (100) comprising a ring-shaped stator unit core (110) and a plurality of teeth protruding inward in a radial direction from an inner circumferential surface of the stator unit core (110);
   a rotor unit (200) spaced inward from the stator unit to rotate around a center shaft (210); and
   a terminal unit (400) formed on one side of the stator unit (100),
   wherein the rotor unit (200) comprises at least one salient pole (220) convexly formed outward along an outer circumferential surface thereof,
   each of the at least one salient pole (220) is formed in the shape of an oval arc, and
   wherein the oval arc comprising a major axis having a greater diameter and a minor axis having a smaller diameter, a ratio (a/b) of the length of the major axis with respect to the length of the minor axis is in a range from 1.04 to 1.10.

2. The variable reluctance resolver (100) of claim 1, wherein, the major axis and the minor axis are perpendicular to each other, each of the at least one salient pole (220) has an arc shape that is rotationally symmetric with respect to the minor axis.

3. The variable reluctance resolver (100) of claim 2, wherein an extended line to the center shaft (210) from a central position of an outer circumferential surface of each of the at least one salient pole (220) coincides with the minor axis of the oval.

4. The variable reluctance resolver (110) of claim 2, wherein the outer circumferential surface of each of the at least one salient pole has an arc shape that contacts the minor axis.

**5.** The variable reluctance resolver (100) of claim 1, wherein in an oval comprising the outer circumferential surface of any one of the at least one salient pole (220), a center of the oval is spaced a predetermined distance in a radial direction from the center shaft (210).

**6.** The variable reluctance resolver (100) of claim 1, wherein at least one pair of salient poles (220) is formed, and the two salient poles (220) of each pair are formed radially opposite with respect to the center shaft (210).

**Patentansprüche**

**1.** Resolver (10) mit veränderlicher Reluktanz, umfassend:

eine Statoreinheit (100), die einen ringförmigen Statoreinheitskern (110) und eine Mehrzahl von Zähnen umfasst, die in einer radialen Richtung von einer Innenumfangsfläche des Statoreinheitskerns (110) nach innen ragen; eine Rotoreinheit (200), die von der Statoreinheit nach innen beabstandet ist, um sich um eine mittlere Welle (210) zu drehen; und eine Anschlusseinheit (400), die auf einer Seite der Statoreinheit (100) ausgebildet ist, wobei die Rotoreinheit (200) mindestens einen Schenkelpol (220) umfasst, der entlang einer Außenumfangsfläche davon konvex nach außen ausgebildet ist, wobei jeder des mindestens einen Schenkelpols (220) in der Form eines ovalen Bogens ausgebildet ist, und wobei der ovale Bogen eine Hauptachse, die einen größeren Durchmesser aufweist, und eine Nebenachse, die einen kleineren Durchmesser aufweist, umfasst, wobei ein Verhältnis (a/b) der Länge der Hauptachse zu der Länge der Nebenachse in einem Bereich von 1,04 bis 1,10 liegt.

**2.** Resolver (100) mit veränderlicher Reluktanz nach Anspruch 1, wobei die Hauptachse und die Nebenachse senkrecht zueinander stehen, wobei jeder des mindestens einen Schenkelpols (220) eine Bogenform aufweist, die in Bezug auf die Nebenachse drehsymmetrisch ist.

**3.** Resolver (100) mit veränderlicher Reluktanz nach Anspruch 2, wobei sich eine verlängerte Linie von einer mittleren Position einer Außenumfangsfläche jedes des mindestens einen Schenkelpols (220) zu der mittleren Welle (210) mit der Nebenachse des Ovals deckt.

**4.** Resolver (110) mit veränderlicher Reluktanz nach Anspruch 2, wobei die Außenumfangsfläche jedes des mindestens einen Schenkelpols eine Bogenform aufweist, die die Nebenachse berührt.

**5.** Resolver (100) mit veränderlicher Reluktanz nach Anspruch 1, wobei in einem Oval, das die Außenumfangsfläche jedes des mindestens einen Schenkelpols (220) umfasst, eine Mitte des Ovals um einem vorbestimmten Abstand in einer radialen Richtung von der mittleren Welle (210) beabstandet ist.

**6.** Resolver (100) mit veränderlicher Reluktanz nach Anspruch 1, wobei mindestens ein Paar von Schenkelpolen (220) ausgebildet ist, und die zwei Schenkelpole (220) jedes Paars in Bezug auf die mittlere Welle (210) radial gegenüberliegend ausgebildet sind.

**Revendications**

**1.** Résolveur à réluctance variable (10) comprenant :
une unité stator (100) comprenant un noyau d'unité stator en forme d'anneau (110) et une pluralité de dents faisant saillie vers l'intérieur dans une direction radiale à partir de la surface circonférentielle interne du noyau d'unité stator (110) :

une unité rotor (200) espacée vers l'intérieur de l'unité stator pour tourner autour d'un axe central (210) ; et une unité terminale (400) formée sur un côté de l'unité stator (100), dans lequel l'unité rotor (200) comprend au moins un pôle saillant (220) formé de façon convexe vers l'extérieur le long d'une surface circonférentielle externe de celle-ci ; chacun du ou des pôles saillants (220) est en forme d'arc ovale, et dans lequel l'arc ovale comprend un axe majeur ayant un diamètre plus grand et un axe mineur ayant un diamètre plus petit, un rapport (a/b) de la longueur de l'axe majeur sur la longueur de l'axe mineur est compris entre 1,04 et 1,10.

2. Résolveur à réluctance variable (100) selon la revendication 1, dans lequel l'axe majeur et l'axe mineur sont perpendiculaires l'un à l'autre, chacun du ou des pôles saillants (220) présente une forme d'arc qui est symétrique en rotation par rapport à l'axe mineur.

3. Résolveur à réluctance variable (100) selon la revendication 2, dans lequel une ligne étendue vers l'axe central (210) à partir d'une postion centrale d'une surface circonférentielle externe de chacun du ou des pôles saillants (220) coïncide avec l'axe mineur de l'ovale.

4. Résolveur à réluctance variable (110) selon la revendication 2, dans lequel la surface circonférentielle externe de chacun du ou des pôles saillants présente une forme d'arc qui entre en contact avec l'axe mineur.

5. Résolveur à réluctance variable (100) selon la revendication 1, dans lequel dans un ovale comprenant la surface circonférentielle externe de l'un quelconque du ou des pôles saillants (220), un centre de l'ovale est espacé d'une distance prédéterminée dans une direction radiale de l'axe central (210).

6. Résolveur à réluctance variable (100) selon la revendication 1, dans lequel au moins une paire de pôles saillants (220) est formée, et les deux pôles saillants (220) de chaque paire sont formés de façon radialement opposée à l'axe central (210).

EP 3 820 028 B1

# FIG. 1

1 : VR RESOLVER    3 : SALIENT POLE

2 : ROTOR

4 : STATOR

5 : INNER PERIPHERAL
SURFACE OF STATOR

7 : OUTER PERIPHERAL
SURFACE OF ROTOR

6 : CENTER

9

# FIG. 2

# FIG. 3

FIG. 4

FIG. 5

(a)

(b)

(c)

(d)

EP 3 820 028 B1

# FIG. 6

(a)

(b)

(c)

EP 3 820 028 B1

**EP 3 820 028 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7030532 B
- JP 2017120222 A
- EP 2666696 A1